# EUROPEAN PATENT APPLICATION

(11) **EP 4 682 696 A1**
(43) Date of publication of application: **21.01.2026**
(21) Application number: 24769825.1
(22) Date of filing: 06.03.2024
(51) Int. Cl.: G06F 3/04845, G06T 11/60

(54) **SPECIAL EFFECT PROCESSING METHOD AND APPARATUS, ELECTRONIC DEVICE, AND STORAGE MEDIUM**

(30) Priority: 14.03.2023 CN 202310267600
(71) Applicant: Beijing Zitiao Network Technology Co., Ltd., Beijing 100190 (CN)
(72) Inventor: ZHOU, Xubin, Beijing 100028 (CN)
(74) Representative: Marks & Clerk LLP
(86) International application number: PCT/CN2024/080374
(87) International publication number: WO 2024/188132

(57) **Abstract**

The embodiments of the present disclosure provide a special effect processing method and apparatus, an electronic device, and a storage medium. The method comprises: acquiring an original image to be processed in response to a special effect triggering operation; performing special effect processing on an area to be processed of a preset image object to give a special effect area in the condition that the preset image object is present in the original image; adjusting an area display position of at least one special effect area on the basis of a preset special effect form in the condition that two or more special effect areas are present, so as to give a special effect object in a special effect form; and determining a background image corresponding to the special effect object, and displaying the special effect object in the background image to give a special effect image.

## Description

This application claims priority to Chinese Patent Application No. 202310267600.3, entitled "SPECIAL EFFECT PROCESSING METHOD AND APPARATUS, ELECTRONIC DEVICE, AND STORAGE MEDIUM," filed with the China National Intellectual Property Administration on March 14, 2023, which is incorporated by reference in its entirety.

### FIELD

Embodiments of the present disclosure relate to the technical field of image processing, and in particular, to an effect processing method and apparatus, an electronic device, and a storage medium.

### BACKGROUND

With the development of network technology, an increasing number of applications have entered lives of users, particularly a series of software that can shoot short videos, which are deeply enjoyed by the users.

In the prior art, software developers may add a variety of effect props to the applications for the users to use while shooting the videos. However, the effect props currently provided to the users are quite limited, and both the quality of the videos and the richness of the content of the videos need further improvement. Meanwhile, effects added by the users to the videos cannot interact with the video content. For example, when a scene includes a user body, there is no linkage between the added effects and the user body, resulting in a poor effect video outcome generated based on the relevant effect props.

### SUMMARY

The present disclosure provides an effect processing method and apparatus, an electronic device, and a storage medium.

In a first aspect, an embodiment of the present disclosure provides an effect processing method. The method includes:
acquiring an original image to be processed in response to an effect trigger operation; performing, in the case of a preset image object existing in the original image, effect processing on an area to be processed in the preset image object to obtain an effect area;
adjusting, in the case of existence of two or more effect areas, an area display position of at least one effect area based on a preset effect form, to obtain an effect object presenting the effect form; and
determining a background image corresponding to the effect object, and displaying the effect object in the background image to obtain an effect image.

In a second aspect, an embodiment of the present disclosure further provides an effect processing apparatus. The apparatus includes:
an effect trigger module, configured to acquire an original image to be processed in response to an effect trigger operation;
an effect area generation module, configured to perform, in the case of a preset image object existing in the original image, the effect processing on an area to be processed in the preset image object to obtain an effect area;
an effect object generation module, configured to adjust, in the case of existence of two or more effect areas, an area display position of at least one effect area based on a preset effect form, to obtain an effect object presenting the effect form; and
an effect image display module, configured to determine a background image corresponding to the effect object, and display the effect object in the background image to obtain an effect image.

In a third aspect, an embodiment of the present disclosure further provides an electronic device. The electronic device includes:
one or more processors; and
a storage apparatus, configured to store one or more programs, wherein
the one or more programs, when executed by the one or more processors, cause the one or more processors to implement the effect processing method according to any of the embodiments of the present disclosure.

In a fourth aspect, an embodiment of the present disclosure further provides a storage medium including computer-executable instructions. The computer-executable instructions, when executed by a computer processor, are used to perform the effect processing method according to any one of the embodiments of the present disclosure.

According to the technical solutions in the embodiments of the present disclosure, an original image to be processed is acquired in response to an effect trigger operation. Then, in the case of the preset image object existing in the original image, effect processing is performed on the area to be processed in the preset image object to obtain the effect area, and further, in the case of existence of the two or more effect areas, an area display position of the at least one effect area is adjusted based on the preset effect form to obtain an effect object presenting the effect form, and the effect object can change as the preset image object changes. Finally, a background image corresponding to the effect object is determined, and the effect object is displayed in the background image to obtain an effect image.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of an effect processing method according to an embodiment of the present disclosure;
FIG. 2 is a schematic diagram of a process for determining an effect object according to an embodiment of the present disclosure;
FIG. 3 is a schematic flowchart of another effect processing method according to an embodiment of the present disclosure;
FIG. 4 is a schematic flowchart of another effect processing method according to an embodiment of the present disclosure;
FIG. 5 is a schematic diagram of an effect object according to an embodiment of the present disclosure;
FIG. 6 is a schematic diagram of a structure of an effect processing apparatus according to an embodiment of the present disclosure; and
FIG. 7 is a schematic diagram of a structure of an electronic device according to an embodiment of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to." The term "based on" is interpreted as "at least partially based on." The term "an embodiment" means "at least one embodiment;" the term "another embodiment" means "at least one additional embodiment;" and the term "some embodiments" means "at least some embodiments." Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of" mentioned in the present disclosure are illustrative and not limiting, and those skilled in the art should understand that unless otherwise explicitly specified in the context, the modifiers should be understood as "one or more."

The names of messages or information exchanged between a plurality of apparatuses in the implementations of the present disclosure are used for illustrative purposes only, and are not used to limit the scope of these messages or information.

It should be understood that before using the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to receiving an active request from the user, a prompt message is sent to the user to clearly inform the user that a requested operation will require access to and use of the personal information of the user. As such, the user may independently choose, according to the prompt message, whether to provide the personal information to software or hardware, such as an electronic device, an application, a server, or a storage medium, that performs the operations of the technical solutions of the present disclosure.

As an optional but non-limiting implementation, in response to receiving the active request from the user, the method for sending the prompt message to the user may be, for example, a pop-up window, in which the prompt message may be presented in text. Further, the pop-up window may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

It should be understood that data (including but not limited to the data itself, and data acquisition or usage) involved in the technical solutions should comply with the requirements of corresponding laws and regulations, and relevant stipulations.

Before introducing the technical solution, application scenarios are first exemplarily described. The technical solutions of embodiments of the present disclosure may be applied to any scenario where an effect image or video needs to be generated. Exemplarily, when a user uploads a recorded multimedia data stream to a server side corresponding to an application, or when a user collects video images in real time through a mobile terminal including a camera device, an application may detect scene content (i.e., a plurality of image bodies in a scene) of the plurality of acquired video frames of images, to determine a preset image object, where the preset image object in the video scene may be dynamic or static, and meanwhile there may be one or more preset image bodies. Based on this, when the application detects that there is a preset image object in an obtained original image, based on the solutions of embodiments of the present disclosure, effect processing may be performed on the preset image object based on a pre-developed and designed effect that is selected by the user from an effect prop package, to obtain an effect object presenting a preset effect form, thereby determining a background image corresponding to the effect object, and then generating an effect image based on the background image and the effect object.

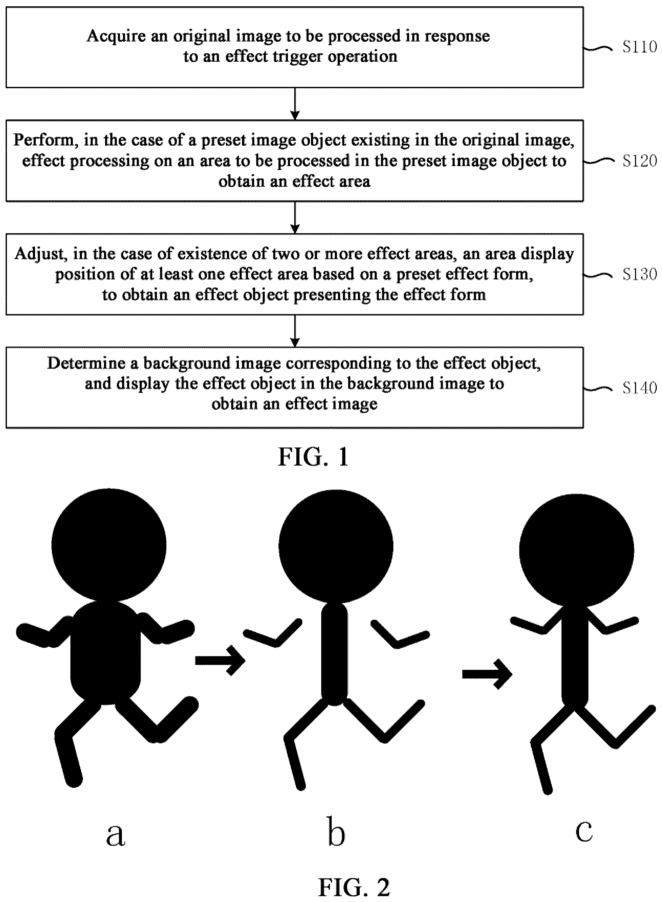

FIG. 1 is a schematic flowchart of an effect processing method according to an embodiment of the present disclosure. This embodiment of the present disclosure is applicable to a case of processing a current original image based on application software to generate an effect image. For example, when there is a preset image object in the current original image, if it is detected that the user selects one effect from an effect package, an application may process the preset image object in the original image according to the solutions in embodiments of the present disclosure to obtain an effect object presenting a preset effect form, and then generate an effect image based on the effect object and a background image. The method may be performed by an effect processing apparatus. The apparatus may be implemented in the form of software and/or hardware, and is optionally implemented through an electronic device. The electronic device may be a mobile terminal, a personal computer (PC) terminal, a server, or the like.

As shown in FIG. 1, the method according to this embodiment may specifically include:
S110: Acquire an original image to be processed in response to an effect trigger operation.

The apparatus for performing the effect processing method according to this embodiment of the present disclosure may be integrated into application software supporting an effect image processing function. The software may be installed in an electronic device. Optionally, the electronic device may be a mobile terminal, a PC terminal, or the like. The application software may be a type of software for image/video processing. Specific application software is not enumerated herein, as long as image/video processing may be achieved. It may also be a specially developed application and is integrated into software that implements effect processing, or integrated into a corresponding page, thereby allowing a user to process effect images through the integrated page on the PC terminal.

In this embodiment, in an application software or an application supporting the effect image processing function, a control for triggering effects may be developed in advance. When it is detected that a user triggers the control, a response may be made to the trigger operation, thereby acquiring the original image to be processed.

The original image may be an image that needs to be processed. The image may be an image collected based on a terminal device, or an image pre-stored by the application software in a storage space. The terminal device may refer to an electronic device with an image shooting function, such as a camera, a smart phone, and a tablet personal computer. In practical applications, when it is detected that a user triggers the effect operation, the terminal device may face the user to collect the original image; or, when it is detected that the user triggers the effect operation, a plurality of images associated with the effect are determined in a specific database, and one or more of the images are determined as the original image according to a preset selection rule.

In practical applications, the original image to be processed is acquired typically in the case of triggering some effect operations, and the effect trigger operations may include at least one of the following: triggering an effect prop, audio information triggering an effect wakeup word, or a current body movement matching a preset body movement.

In this embodiment, a control for triggering the effect prop may be preset. When a user triggers the control, an effect prop display page may pop up on a display interface, and the display interface may display a plurality of effect props. The user may trigger respective effect props. When it is detected that the user triggers an effect prop corresponding to acquiring an original image to be processed, it indicates that the effect trigger operation is triggered. Another implementation may be as follows: audio information of a user may be collected in advance, and the collected audio information is analyzed and processed, to recognize a text corresponding to the audio information. If the text corresponding to the audio information includes preset wakeup words, optionally, the wakeup words may be phrases in types such as "Please capture a current image" or "Please enable an XX effect function," it indicates that the original image in the display interface may be acquired. Yet another implementation may be as follows: some body movements may be preset as an effect trigger action. When it is detected that a current body movement of the user made within the field of view is consistent with the preset body movement, it may be determined that the effect operation is triggered. Optionally, the preset body movements may include raising a hand, opening the mouth, turning the head, or the like.

S120: Perform, in the case of a preset image object existing in the original image, the effect processing on an area to be processed in the preset image object to obtain an effect area.

The preset image object may be preset, and is an object on which effect processing may be performed. In this embodiment, some image bodies may be preset as preset image bodies corresponding to respective effects. When it is detected that the preset image object exists in the image bodies included in the original image, effect processing may be performed on the preset image object to obtain an effect object. The preset image object may be any object object, and optionally, may be any limb part associated with a person, an animal, a plant, a building, or the like.

An area to be processed may be an object area in the preset image object where effect processing needs to be processed. Optionally, the area to be processed may include a plurality of different types of object areas, and each type of object area may correspond to a different effect processing manner. Optionally, the area to be processed may include a first object area and a second object area. The first object area may be an object area with a display size in the original image being changed during effect processing. The first object area may be any area in the preset image object.

Exemplarily, when the preset image object is a human body, the first object area may be an area corresponding to the forearm of the human body, an area corresponding to the upper arm, an area corresponding to the lower leg, an area corresponding to the upper leg, an area corresponding to the torso, etc. The second object area may be any object area other than the first object area in the preset image object. Exemplarily, when the first object area is the area corresponding to the forearm, the area corresponding to the upper arm, the area corresponding to the lower leg, the area corresponding to the upper leg, and the area corresponding to the user torso, the second object area may be an area corresponding to the head, an area corresponding to the hand, an area corresponding to the foot, etc.

In other words, in the same preset image theme, different areas to be processed may be processed using different effect processing manners. Exemplarily, taking the preset image object being a human body as an example, the display size of the body torso may be smaller than that of the body torso in the original image, and meanwhile other object areas normally display original image information.

The effect area may be an object area that exists in the original image and is subjected to effect processing. In this embodiment, the effect area may be an area that is associated with the preset image object and corresponds to any body part subjected to effect processing.

It should be noted that there may be one or more preset image entities in the same original image. Regardless of one or more, the technical solution according to this embodiment of the present disclosure may be used to perform effect processing, to obtain corresponding effect entities.

In practical applications, after obtaining the original image, when a skeleton point detection algorithm is used to determine that the preset image object exists in the original image, the area to be processed that needs to be subjected to effect processing in the preset image object may be first determined. Then effect processing may be performed on a first type of area to be processed according to a pre-deployed first algorithm to obtain the effect area corresponding to the first object area, and meanwhile effect processing may also be performed on the second type of area to be processed based on a pre-deployed second algorithm to obtain the effect area corresponding to the second object area.

Optionally, a display size of at least part of the object area in the effect object in at least one direction is smaller than its display size in the original image. In this embodiment, the object area may be an area that is associated with the preset image object and corresponds to any body part subjected to effect processing. The display size of the object area in at least one direction may be an image display area of the object area in the at least one direction. The direction may serve as a basis for compressing the display size of the object area. Namely, the object area may be compressed from its display size in the original image to its display size in the image after effect processing based on the direction. Optionally, the direction may be any direction.

It should be understood that at least part of the object area in the effect object includes part of the object area and the entire area in the effect object. Therefore, an object may also be an object where the display size of the entire object area in at least one direction is smaller than that of the entire object area in the original image. In practical applications, if the display size of the entire object area in the effect object in the at least one direction is unequal to the display size of the entire object area in the original image, the area to be processed corresponds to the entire object area in the preset image object, correspondingly, the effect area corresponding to the area to be processed corresponds to the entire object area in the effect object, and in this case, the effect object corresponding to the preset image object may be directly generated according to the effect area corresponding to the area to be processed. If the display size of part of the object area in the effect object in the at least one direction is unequal to the display size of the part of the object area in the original image, the preset image object includes other object areas besides the first object area. Correspondingly, in addition to the effect area corresponding to the first object area, the effect object may also include other effect areas. In this case, the effect object corresponding to the preset image object may be generated based on the effect area corresponding to the first object area and effect areas corresponding to the other object areas.

It should be noted that the display size of at least part of the object area in the effect object in the at least one direction is greater than its display size in the original image, and whether it is smaller or greater, the technical solution according to this embodiment of the present disclosure may be used to determine the effect image.

S130: Adjust, in the case of existence of two or more effect areas, an area display position of at least one effect area based on a preset effect form, to obtain an effect object presenting the effect form.

The effect form may be a preset final display form of the effect object on the display interface. The effect form may be obtained after combining two or more effect areas. It should be noted that the combination herein is not equivalent to a connection, different effect areas in the effect form may not be in communication and may be displayed as independent areas. The area display position may be a position of the effect area on the effect object. The effect object may be an effect corresponding to the preset image object that exists in the original image and is obtained after effect processing.

In the case of existence of two or more effect areas, a problem that the effect area detaches from the effect object may occur, leading to discontinuity between the effect areas included in the effect object. Alternatively, it is required that the combined effect areas are to be split into several independent areas to be displayed, and therefore the area display position of at least one effect area may be adjusted based on the preset effect form, to obtain the effect object presenting the effect form.

In practical applications, in the case of existence of two or more effect areas, area display positions corresponding to the effect areas may be determined based on the preset body effect form. Further, the effect areas are moved to the area display positions to obtain the effect object presenting the effect form. Specifically, after determining the area display positions, vectors from current positions of the effect areas to the corresponding area display positions may be constructed, and therefore the effect areas are controlled to move according to the corresponding vectors. Namely, the effect areas may be moved to the corresponding area display positions, and after all the effect areas are controlled to move, the effect object presenting the effect form may be obtained.

Exemplarily, a generation process of an effect object may be illustrated in combination with FIG. 2. A human body shown in FIG. 2a may be a preset image object in the original image. The areas to be processed in the human body may be the left forearm, the left upper arm, the right forearm, the right upper arm, the left lower leg, the left upper leg, the right lower leg, the right upper leg, the torso, and the head. Further, after effect processing is performed on the areas to be processed to obtain corresponding effect areas, a schematic diagram of effect areas shown in FIG. 2b may be obtained. It can be seen from FIG. 2b that display sizes of the effect area corresponding to the left forearm, the effect area corresponding to the left upper arm, the effect area corresponding to the right forearm, the effect area corresponding to the right upper arm, the effect area corresponding to the left lower leg, the effect area corresponding to the left upper leg, the effect area corresponding to the right lower leg, the effect area corresponding to the right upper leg, and the effect area corresponding to the torso are all smaller than their display sizes in FIG. 2a. The display size of the effect area corresponding to the head does not change. It may also be seen that the left upper arm and the left forearm are separated from the torso, the right forearm and the right upper arm are separated from the torso, the left lower leg and the left upper leg are not connected to the human hip, the right lower leg and the right upper leg are not connected to the human hip, and in this case, an area display position of each effect area may be determined based on the preset body form. Then, the effect areas are moved to the corresponding area display positions to obtain the effect object presenting the effect form. Namely, the left upper arm and the left forearm are connected to the neck on the torso, the right forearm and the right upper arm are connected to the neck on the torso, the left lower leg and the left upper leg are connected to the human hip, and the right lower leg and the right upper leg are connected to the human hip to obtain the effect object shown in FIG. 2c.Certainly, if a form of the effect object shown in FIG. 2b matches the preset effect form, the effect object shown in FIG. 2b may also be used as a final effect object to be output.

It should be understood that if the plurality of effect areas obtained after effect processing have presented the preset effect form, the current display positions of the effect areas may be determined as the area display positions. Namely, the area display positions of the effect areas may be adjusted to be as (0,0) or (0,0,0).

S140: Determine a background image corresponding to the effect object, and display the effect object in the background image to obtain an effect image.

The background image may be an image located behind the effect object, namely, an image corresponding to a background is farther away from a camera relative to the effect object. In this embodiment, the background image may be any image, and optionally, may be the original image, a background image corresponding to the effect object that is preset and stored in a material library, or a background image obtained after a series of image processing based on the original image, which is not specifically limited in this embodiment of the present disclosure.

In practical applications, after obtaining the effect object, to highlight and complement the effect object in a display scene and enhance the perspective and spatial sense of the display scene, the background image corresponding to the effect object may be determined to display the effect object within the background image, thereby obtaining the special effect image.

It should be noted that there may be at least four methods for determining the background image corresponding to the effect object, and the four methods may be respectively described as below.

The first method may include: acquiring a default background image corresponding to the effect object.

In this embodiment, in a development phase of an application, default background images corresponding to a plurality of types of effect bodies may be preset, and the default background images and the corresponding types of effect bodies may be correspondingly stored in a database of the terminal device to be collected. Therefore, when the effect object is obtained, the corresponding default background image may be directly acquired according to the type of the effect object. In this case, the default background image may be used as the background image corresponding to the effect object, and then the effect object is displayed in the background image to obtain the effect image.

It should be noted that there may be one or more default background images corresponding to each type of effect object. If there is one default background image corresponding to each type of effect object, when the effect object is obtained and the type of the effect object is determined, the default background image corresponding to the effect object may be directly retrieved, and then the effect object is displayed in the default background image to obtain the effect image. If there are a plurality of default background images corresponding to each type of effect object, these default background images may be arranged according to a preset retrieval sequence, and then when the effect object is obtained and the type of the effect object is determined, the first image in the plurality of default background images corresponding to the effect object is used as the background image corresponding to the effect object, and then the effect object is displayed in the background image to obtain the effect image. Optionally, the retrieval sequence may be a sequence of historically retrieved data of the default background images from high to low, or a sequence of application frequencies of the default background images by the user from high to low. Alternatively, when there are a plurality of default background images corresponding to each type of effect object, when the effect object is obtained and the type of the effect object is determined, one default background image may be randomly retrieved from the plurality of default background images corresponding to the type of effect object, and in this case, the default background image may be used as the background image corresponding to the currently obtained effect object, thereby displaying the effect object within the background image to obtain the effect image.

The second method may include: receiving a background setting operation for a background image corresponding to the effect object.

In this embodiment, when the user triggers a corresponding effect prop, before performing the effect processing on the preset image object within the original image, a background image setting method selection page may first pop up on the display interface, and the display interface may display a plurality of setting methods for the background image. Each setting method is displayed in the page in the form of selection controls. The user may trigger the corresponding selection control. When it is detected that the user triggers any one of the selection controls, a background image setting page corresponding to the selection control may pop up on the display interface, and then the user may input a series of trigger operations on the background image setting page, thereby obtaining the background image that satisfies user requirements and corresponds to the effect object. In this case, the above background image setting method trigger operation and a series of operations for the background image setting page may be used as background setting operations for the background image corresponding to the effect object.

It should be noted that the background image setting method may be selecting from the material library of the application software, or may also be selecting from a local storage space (e.g., an album) of a current terminal device, or may also be real-time shooting.

Optionally, when it is detected that the user triggers the selection control "selecting from the material library of the application software," a material library display page may pop up on the display interface. The display page may include a plurality of background images to be selected. Moreover, when the plurality of background images to be selected are provided to the user, an image selection countdown may also be displayed on the display interface, and countdown time may be a preset duration. It should be understood that the user may make a selection from the plurality of background images to be selected through the trigger operation. When a selection duration reaches a preset duration, namely, the image selection countdown reaches zero, the background image that is selected by the user at the time instant is the background image corresponding to the effect object. Certainly, before reaching the preset duration, the user may also issue a confirmation instruction based on a confirmation control to directly end the countdown process of the image selection countdown, and use the currently selected background image to be selected as the background image corresponding to the effect object. Those skilled in the art should understand that when there are a plurality of background images to be selected, the user may sequentially select from the plurality of background images to be selected according to preferences. However, after the selection time reaches the preset duration, the application software only uses the background image to be selected that is the latest selected by the user as the background image corresponding to the effect object. Alternatively, the user may select from the plurality of background images to be selected through the trigger operation. When the selection duration reaches a first preset duration, trigger numbers of the background images to be selected on the current display interface within the first preset duration may be counted, and the background image to be selected that has the highest trigger number is used as the background image corresponding to the effect object.

Optionally, if it is detected that the user triggers the selection control "selecting from the local storage space (e.g., the album) from the current terminal device," the display may directly jump to a display page of the local storage space. The display page may include at least one image stored in the current terminal device. The user may select from the at least one image through a trigger operation. When the selection trigger operation of the user for any image in the display page is detected, the image selected at this time may be used as the background image corresponding to the effect object.

Optionally, when it is detected that the user triggers a "real-time shooting" control, a field-of-view area that may be shot by a camera device (e.g., a front camera or a rear camera) of the terminal device may be displayed on the display interface, and when a trigger operation of the user on an image shooting control is detected, an image captured at a current time instant may be used as the background image corresponding to the effect object.

The third method may include: using the original image as a background image corresponding to the effect object.

In practical applications, after obtaining the effect object, the original image obtained previously may be retrieved. In this case, the original image may be used as the background image corresponding to the effect object, and then, the effect object is displayed at any position in the background image to obtain the effect image.

The fourth method may include: acquiring background information other than the preset image object in the original image, and performing information completion processing on the background information to obtain a background image corresponding to the effect object.

In this embodiment, the background information may be pixel information of an image outside an outer contour of the preset image object in the original image. In practical applications, after obtaining the effect object, the original image may be processed based on a pre-deployed algorithm to obtain the background information of the original image other than the preset image object. Further, the information completion processing may be performed on the background information, and optionally, the information completion processing may include pixel value interpolation fitting processing, pixel value filling processing, or the like. Then, the background image corresponding to the effect object is determined according to the processed background information.

It should be noted that the advantages of determining the background image corresponding to the effect object based on the above four methods are as follows: enhancing the richness and fun of the effect image while improving the interactive experience of the user when using the effect prop, and satisfying personalized requirements of the user.

According to the technical solution in this embodiment of the present disclosure, an original image to be processed is acquired in response to an effect trigger operation. Then, in the case of a preset image object existing in the original image, effect processing is performed on an area to be processed in the preset image object to obtain an effect area. Further, in the case of an existence of two or more effect areas, an area display position of the at least one effect area is adjusted based on a preset effect form to obtain the effect object presenting the effect form, and the effect object may change as the preset image object changes. Finally, the background image corresponding to the effect object is determined, and the effect object is displayed in the background image to obtain the effect image. The technical problem in the prior art that an added effect cannot be linked with a preset image object in an image is solved, the effect of performing area effect processing on the preset image object in the image is achieved, the effect image processing manner is more refined, meanwhile, the effect object presenting the effect form can be obtained by adjusting the area display position of the effect area, the richness and fun of the effect image are enhanced, and the usage experience of the user for the effect prop is improved.

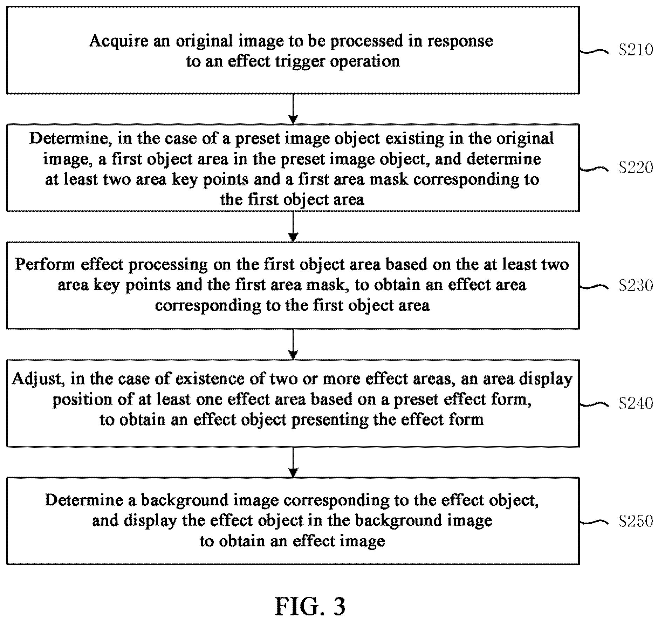

FIG. 3 is a schematic flowchart of another effect processing method according to an embodiment of the present disclosure. Based on the above embodiment, in the technical solution according to this embodiment, an area to be processed includes a first object area. When effect processing is performed on the area to be processed in a preset image object, the first object area of the preset image object, as well as corresponding area key points and a first area mask are first determined. Then effect processing is performed on the first object area based on the area key points and the first area mask, to obtain an effect area corresponding to the first object area. For a specific implementation, reference may be made to the description of this embodiment. Technical features that are the same with or similar to those in the above embodiment are not repeated herein.

As shown in FIG. 3, the method in this embodiment may specifically include:
S210: Acquire an original image to be processed in response to an effect trigger operation.
S220: Determine, in the case of a preset image object existing in the original image, a first object area in the preset image object, and determine at least two area key points and a first area mask corresponding to the first object area.

The first object area may be an object area with a display size in the original image being changed during effect processing. The first object area may be any area in the preset image object. Exemplarily, if the preset image object is a user, the first object area may be an area corresponding to the forearm of the user, an area corresponding to the upper arm of the user, an area corresponding to the lower leg of the user, an area corresponding to the upper leg of the user, an area corresponding to the torso of the user, etc. The area key points may be key points within the first object area where a pose may change. The at least two area key points may be used to represent an approximate area range of the corresponding first object area. Exemplarily, if the preset image object is the user, the first object area is the area corresponding to the forearm of the user, the at least two area key points may be a wrist skeleton key point and an elbow skeleton key point, and correspondingly, an approximate range of the forearm of the user may be represented based on the wrist skeleton key point and the elbow skeleton key point. It should be noted that there may be two or more area reference points, which may be determined based on an area range of the object area. Specifically, when the area range of the object area is relative large, the number of the area key points may be set to be at least two; and when the area range of the object area is relatively small, the number of the area key points may be set to be two. Certainly, the number of the area key points for any object area may be set according to requirement of the user, as long as the set area key points may achieve the subsequent effect processing process.

The first area mask may an image for representing an approximate contour of the first object area. Those skilled in the art should understand that a mask image is a binary image composed of pixel values of 0 and 1. In the field of image processing, the mask image may be used to extract an area of interest, pixel values within the area of interest are adjusted to be 1, and pixel values of the image outside the area of interest are adjusted to be 0, thereby obtaining the mask image that segments the area of interest from the image.

In practical applications, when the original image is obtained and the preset image object is detected from the original image, the first object area in the preset image object may be first determined. Then the at least two area key points corresponding to the first object area are determined based on a pre-deployed key point detection algorithm, meanwhile, pixel values in the original image corresponding to the first object area may be adjusted to be a first preset pixel value, the pixel values outside the first object area may be adjusted to be a second preset pixel value, and then the first area mask corresponding to the first object area may be obtained. The first preset pixel value may be any pixel value, and optionally, may be 1. The second preset pixel value may be any pixel value, and optionally, may be 0. It should be noted that the first preset pixel value and the second preset pixel value are two different pixel values, so that the first object area in the original image may be displayed in a distinguished way, thereby obtaining the corresponding first area mask.

S230: Perform effect processing on the first object area based on the at least two area key points and the first area mask, to obtain an effect area corresponding to the first object area.

In this embodiment, after obtaining the at least two area key points and the first area mask corresponding to the first object area, effect processing may be performed on the first object area based on the at least two area key points and the first area mask, thereby obtaining the effect area corresponding to the first object area. The effect area corresponding to the first object area may be an object area with a display size in at least one direction being not equal to its display size in the original image.

In practical applications, the first area mask is a binary image generated based on the first object area in the original image, meanwhile, the area key points are key points for representing the area range and/or an area trend of the first object area. Therefore, if effect processing needs to be performed on the first object area to change the display size of the first object area in the original image, a sampling point corresponding to each pixel point in the first area mask may be determined based on the area key point. Then, the effect area corresponding to the first area mask may be determined based on the pixel points, the sampling points, and the first area mask. In this case, pixel values of the effect area are the same as the pixel values included in the first area mask. To ensure that the pixel values of the effect area are the same or similar to those in the original image when being displayed on the display interface, the effect area may be processed based on the original image, thereby obtaining the effect area corresponding to the first object area.

Optionally, the step of performing effect processing on the first object area based on the at least two area key points and the first area mask to obtain an effect area corresponding to the first object area includes: determining, for each pixel point to be processed in the first area mask, a target sampling point in the first area mask corresponding to the pixel point to be processed based on the at least two area key points; and determining the effect area corresponding to the first object area based on the pixel points to be processed, the target sampling points, the first area mask, and the original image.

The pixel points to be processed may be all or a part of pixel points in the first area mask. In this embodiment, for each pixel point to be processed in the first area mask, a corresponding pixel point may be determined in the first area mask based on the pixel point to be processed, the at least two area key points, and a preset algorithm, meanwhile, the pixel point may be a point that satisfies effect processing requirements, and in this case, the pixel point may be used as the target sampling point.

In practical applications, for each pixel point to be processed in the first area mask, a pixel point to be applied that corresponds to a pixel point to be processed may be determined in the first area mask based on the at least two area key points. Then, the target sampling point corresponding to the pixel point to be processed may be determined based on the pre-deployed algorithm and the pixel point to be applied. Further, the effect area corresponding to the first object area may be determined based on the pixel point to be processed, the target sampling point, the first area mask, and the original image. The setting has the advantages: rapidly positioning a target sampling point that satisfies the effect processing requirements, and then, improving the effect processing efficiency and shortening response time of the effect prop under a condition that computing power of the terminal device is limited.

It should be noted that a process of determining the target sampling point corresponding to each pixel point to be processed in the first area mask is the same, and the process of determining the target sampling point may be described below with any pixel point to be processed as an example.

Optionally, determining a target sampling point in the first area mask corresponding to the pixel point to be processed based on the at least two area key points includes: determining a sampling reference point in the first area mask corresponding to each pixel point to be processed based on the at least two area key points; and determining, based on the pixel point to be processed and the sampling reference point, the target sampling point in the first area mask corresponding to the pixel point to be processed.

In this embodiment, the sampling reference point may be a pixel point in the first area mask that is associated with both the corresponding pixel point to be processed and the target sampling point, or may also be understood as an intermediate pixel point serving as a basis for target sampling point determination.

In practical applications, when a pixel point to be processed is determined, a spatial positional relationship between the pixel point to be processed and the at least two area key points may be determined. Then, sampling reference points in the first area mask corresponding to the pixel point to be processed may be determined based on the spatial positional relationship and a pre-deployed sampling reference point determination algorithm, thereby determining the target sampling point in the first area mask corresponding to the pixel point to be processed based on the pixel point to be processed and the sampling reference point. The setting has advantages: causing the finally obtained target sampling point to better match with the corresponding first object area, thereby improving a display effect of the effect image, and making the effect object in the effect image closer to the preset image object in the original image.

Optionally, determining a sampling reference point in the first area mask corresponding to each pixel point to be processed based on the at least two area key points may include: determining an area reference line corresponding to the first object area based on the at least two area key points; and respectively determining the sampling reference points corresponding to the pixel points to be processed based on the area reference line.

In this embodiment, the area reference line may be any straight line that passes through the at least two area key points. Optionally, the area reference line may be a regular straight line, an irregular curve, or the like.

Typically, the area reference line may be a line used to represent an area extension trend of the first object area. For example, the area reference line may be an area central line, an area edge line, or the like. Taking the first object area being a skeleton area as an example, the area reference line of the first object area may be a straight line. It should be noted that there may be two or more area key points of the first object area. In the case of existence of a plurality of area key points, every two adjacent area key points may be connected to obtain the area reference line. Further, in a case that the area reference line is not the straight line, the area reference line may also be converted into a smooth curve, such as an area reference line obtained using a preset curve fitting algorithm.

In practical applications, determining an area reference line corresponding to the first object area based on the at least two area key points may include determining a reference line based on spatial position information of the at least two area key points in the original image and using the reference line as the area reference line corresponding to the first object area; or arbitrarily drawing a reference line by passing through the at least two area key points, and using the reference line as the area reference line corresponding to the first object area. Exemplarily, the area reference line may be a straight line that passes through the at least two area key points.

In specific implementations, the area reference line corresponding to the first object area may be determined based on the at least two area key points. Further, the sampling reference point in the first area mask corresponding to each pixel point to be processed may be determined based on the spatial positional relationship between the pixel points to be processed and the area reference line. The setting has the advantages: improving efficiency for determining the sampling reference point, meanwhile, improving fitness between the sampling reference point and the corresponding first object area, and then improving the display effect of the effect image.

Optionally, the respectively determining the sampling reference point corresponding to the pixel point to be processed based on the area reference line may include: using a point on the area reference line that is closest to the pixel point to be processed as the sampling reference point corresponding to the pixel point to be processed.

In this embodiment, if the pixel point to be processed is located on the area reference line, the pixel point to be processed may be used as the sampling reference point; and if the pixel point to be processed is not located on the area reference line, a distance between the pixel point to be processed and each pixel point on the area reference line may be determined, then, a minimum distance is determined from these distances. A pixel point corresponding to the minimum distance is used as the sampling reference point corresponding to the pixel point to be processed. The setting has the advantages: allowing an outer contour of the obtained effect object area to match with an original outer contour of a preset image area, meanwhile, supporting parallel computation for each pixel point to be processed, improving the sampling reference point determining efficiency on the premise of the limited computing power of the terminal device, and then improving the effect processing efficiency.

Optionally, the sampling reference point may be determined based on the following method: drawing a straight line from the pixel point to be processed towards the area reference line, obtaining an intersection point of the area reference line and the straight line, and in this case, using the intersection point as the sampling reference point corresponding to the pixel point to be processed.

It should be noted that the straight line intersecting with the area reference line that is drawn from the pixel point to be processed towards the area reference line may be a straight line at any angle. That is, an included angle between the straight line and the area reference line may be any angle except 180 degrees, as long as the straight line intersects with the area reference line within the first object area. Exemplarily, a perpendicular line may be drawn from the pixel point to be processed to the area reference line, and a point where the perpendicular line intersects the area reference line is used as the corresponding sampling reference point.

It should also be noted that the angle of the straight line drawn from the pixel point to be processed towards the area reference line may be customized based on the effect processing requirements, which is not specifically limited in this embodiment of the present disclosure.

Further, after determining the sampling reference point corresponding to the pixel point to be processed, the target sampling point corresponding to the pixel point to be processed is determined based on the sampling reference point and the pixel point to be processed.

Optionally, determining, based on the pixel point to be processed and the sampling reference point, the target sampling point in the first area mask corresponding to the pixel point to be processed may include: constructing a vector from the pixel point to be processed to the sampling reference point as a reference vector; and determining the target sampling point in the first area mask corresponding to the pixel point to be processed based on the reference vector.

In this embodiment, the reference vector may be a vector constructed according to the pixel point to be processed and the sampling reference point, meanwhile, a direction of the vector is from the pixel point to be processed to the sampling reference point, and a length of the vector is a distance value between the pixel point to be processed and the sampling reference point.

In practical applications, after determining the sampling reference point, the reference vector from the pixel point to be processed to the sampling reference point may be constructed based on the pixel point to be processed and the sampling reference point. Further, a sampling distance may be determined based on the vector length of the reference vector. Specifically, the vector length may be multiplied by a preset multiplier, and a distance obtained after multiplication is used as the sampling distance. Then, in the first area mask, a pixel point away from the pixel point to be processed by the sampling distance in the vector direction of the reference vector is determined, and in this case, the pixel point may be used as the target sampling point corresponding to the pixel point to be processed. The setting has the advantages: adjusting the target sampling point in a customized manner based on a manufacturing requirement of a developer for the effect prop, then changing the display size of the first object area, enhancing diversity and fun of the effect prop, and improving richness of the effect image.

It should be noted that the preset multiplier may be any multiplier, and a value of the preset multiplier is associated with a final display size of the first object area after the first object area is changed into the effect area corresponding to the first object area. Different preset multipliers correspond to different change degrees of the display size. If the display size of the first object area needs to be reduced to be smaller than its display size in the original image, the preset multiplier may be a value greater than 1, such as 3 or 5. If the display size of the first object area needs to be increased, the preset multiplier may be a value less than or equal to 1, such as 3 or 5.

Further, after determining the target sampling points, the effect area corresponding to the first object area may be determined based on the pixel points to be processed, the target sampling points, the first area mask, and the original image. Specifically, the pixel values of the corresponding pixel points to be processed may be updated based on the pixel values of the target sampling points. In this case, the target sampling points may be pixel points outside the first object area, and correspondingly, the updated pixel values of the pixel points to be processed may include other pixel values in addition to the pixel values of the first object area in the first area mask. To ensure that the pixel values of the pixel points in the finally obtained effect area corresponding to the first object area all match with the first object area, an area may be constructed based on the at least two area key points corresponding to the first object area. Then, the pixel values of the pixel points to be processed may be selected based on the area, and the effect area corresponding to the first object area is constructed based on the original image and the screened pixel values of the pixel points to be processed.

Optionally, determining the effect area corresponding to the first object area based on the pixel points to be processed, the target sampling points, the first area mask, and the original image may include: updating the pixel values of the target sampling points corresponding to the pixel points to be processed in the first area mask into sampling pixel values of the pixel points to be processed; determining an effect mask area corresponding to the first object area in the first area mask based on the at least two area key points; and determining the effect area corresponding to the first object area based on the original image and the sampling pixel value of each pixel point to be processed in the effect mask area.

In this embodiment, the effect mask area may be an area that is used to select the pixel points to be processed, to allow the effect area corresponding to the corresponding first object area to satisfy preset effect processing requirements.

In practical applications, after determining the target sampling points, the pixel values of the target sampling points in the first area mask may be determined and used as the sampling pixel values of the corresponding pixel points to be processed. Further, the effect mask area in the first area mask corresponding to the first object area may be determined based on the at least two area key points. Specifically, a line segment with a preset length may be drawn by passing through the area key points. Then, endpoints of all the line segments on the same side of the area reference line may be connected, meanwhile, endpoints of all the line segments on the other side of the area reference line are connected, and then the effect mask area is obtained. Then, each pixel point to be processed may be selected based on the effect mask area. The pixel points to be processed within the effect mask area are reserved, and the pixel points to be processed outside the effect mask area are eliminated. Finally, a sampling pixel value of each pixel point within the effect mask area is multiplied by the pixel value of each pixel point in the original image, and a display area obtained after multiplication is used as the effect area corresponding to the first object area. The setting has the advantages: ensuring that the effect area only includes the pixel values corresponding to the corresponding object area, enhancing the display effect of the effect image, and meanwhile improving the effect processing efficiency on the premise of the limited computing power of the terminal device.

S240: Adjust, in the case of existence of two or more effect areas, an area display position of at least one effect area based on a preset effect form, to obtain an effect object presenting the effect form.

S250: Determine a background image corresponding to the effect object, and display the effect object in the background image to obtain an effect image.

According to the technical solution in this embodiment of the present disclosure, an original image to be processed is acquired in response to the effect trigger operation. Then, in the case of a preset image object existing in the original image, a first object area in the preset image object is determined, and at least two area key points and a first area mask corresponding to the first object area are determined. Then, effect processing is performed on the first object area based on the at least two area key points and the first area mask to obtain an effect area corresponding to the first object area. Further, in the case of existence of the two or more effect areas, an area display position of the at least one effect area is adjusted based on a preset effect form to obtain the effect object presenting the effect form, thereby allowing the effect object to change as the preset image object changes. Finally, a background image corresponding to the effect object is determined, and the effect object is displayed in the background image to obtain the effect image. The technical problem in the prior art that an added effect cannot be linked with a preset image object in an image has been solved, the effect of ensuring that no background image is included in the process of performing effect processing on the preset image object has been achieved, and meanwhile, by using area masking, steps of computation by the terminal device in the effect processing process are reduced, improving the effect processing efficiency.

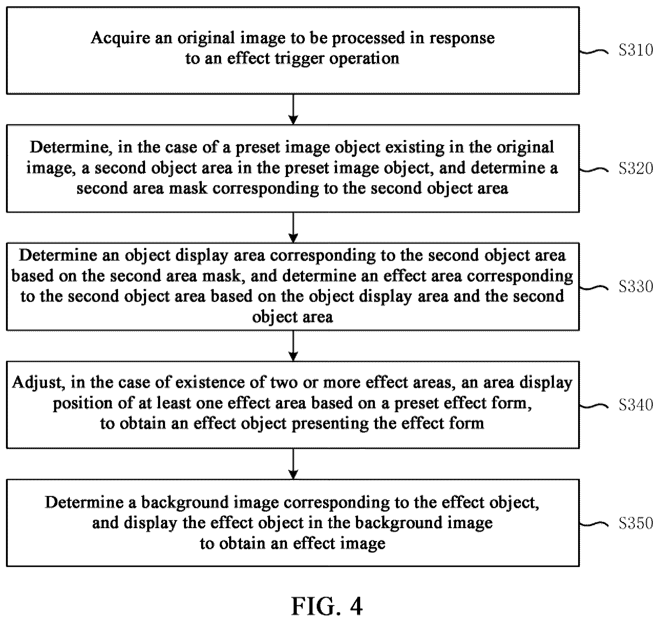

FIG. 4 is a schematic flowchart of another effect processing method according to an embodiment of the present disclosure. Based on the above embodiment, in the technical solution according to this embodiment, an area to be processed further includes a second object area. When effect processing is performed on the area to be processed in a preset image object, the second object area of the preset image object and a corresponding second area mask are first determined, and then an object display area is determined based on the second area mask, to obtain an effect area corresponding to the second object area based on the object display area and the second object area. For a specific implementation, reference may be made to the description of this embodiment. Technical features that are the same with or similar to those in the above embodiment are not repeated herein.

As shown in FIG. 4, the method in this embodiment may specifically include:
S310: Acquire an original image to be processed in response to an effect trigger operation.
S320: Determine, in the case of a preset image object existing in the original image, a second object area in the preset image object, and determine a second area mask corresponding to the second object area.

In this embodiment, the second object area may be any object area other than the first object area in the preset image object. Exemplarily, if the preset image object is a user, and the first object area is an area corresponding to the forearm of the user, an area corresponding to the upper arm of the user, an area corresponding to the lower leg of the user, an area corresponding to the upper leg of the user, and an area corresponding to the torso of the user, the second object area may be an area corresponding to the head of the user, an area corresponding to the hand of the user, an area corresponding to the foot of the user, etc. Correspondingly, the second area mask may an image for representing an approximate contour of the second object area. It should be noted that the method for determining the second area mask is the same as the method for determining the first area mask, which is not specifically described in this embodiment of the present disclosure.

In practical applications, if it is detected that the preset image object exists in the original image, the second object area in the preset image object may be determined, and then the second area mask corresponding to the second object area is determined, to perform effect processing on the second object area based on the second area mask.

S330: Determine an object display area corresponding to the second object area based on the second area mask, and determine an effect area corresponding to the second object area based on the object display area and the second object area.

In this embodiment, the object display area may be an area where a corresponding image object is displayed. That is, an image object corresponding to the corresponding second object area is displayed in the object display area. The object display area may be an area in any shape, and optionally, may be circular, rectangular, or any polygon.

In practical applications, there may be at least two methods for determining the object display area, and the two methods may be respectively described as below.

One method may include: determining an object display area corresponding to the second object area based on the second area mask, which may include: using a local area in the second area mask corresponding to the second object area as the object display area. Specifically, an area where a value in the second area mask is 1 or 255 may be used as the object display area.

The other method may include: determining an object display area corresponding to the second object area based on the second area mask, which may include: determining an object specified display area based on area key points of the second object area, and determining a local area in the second area mask that is located in the object specified display area and corresponds to the second object area as the object display area.

In this embodiment, the object specified display area may be an area where pixel points satisfying a preset specified display condition are displayed. That is, when it is detected that any pixel point satisfies the preset specified display condition, the pixel point may be displayed in the area. In a case that the preset image object is a human body, an area mask corresponding to each object area in the preset image object may be determined based on a human parsing algorithm. The preset specified display condition may be an object area that is preset and displays original image information in a development phase of the application software, an image area in the image where the original image information may be displayed, or the like.

It should be noted that the advantages of determining the object specified display area and determining the object display area based on the object specified display area may include: ensuring that only an image object corresponding to the second object area is displayed in the object display area when the object display area overlaps with other object areas in the preset image object, that is, applying the effect prop to a video shooting process, and meanwhile not displaying the other object areas in addition to the second object area in the object display area when a preset image object in a video moves, thereby improving the display effect of the effect image or the video, and enhancing usage experience of the user for the effect prop.

In practical applications, area key points for representing the second object area may be first determined, and then the object specified display area may be determined based on the area key points and any radius.

Optionally, determining an object specified display area based on the second object area may include: determining an area central point of the object specified display area based on the area key points of the second object area, or based on the second object area and an object key point in the preset image object corresponding to the second object area; and determining the object specified display area based on the area central point and a preset area shape.

In this embodiment, if the area key point is a key point that represents an approximate shape and an approximate range of the second object area, the area key point may be directly used as the area central point of the object specified display area. Then, the object specified display area may be determined based on the area central point and the preset area shape. Exemplarily, if the second object area is the area corresponding to the head of the user and the area key point is a key point corresponding to the nose, the point may be directly used as the area central point of the object specified display area. The preset area shape may be a preset shape used to limit an area shape of the object specified display area. The preset area shape may be any shape, and optionally, may be circular, rectangular, or any polygon.

In this embodiment, if the approximate shape and the approximate range of the second object area cannot be represented only based on the area key points, the object key point in the preset image object corresponding to the second object area may also be determined based on the second object area, and then, the area central point of the object specified display area is determined based on the object key point. The object key point may be an area key point in a third object area that is adjacent to or is connected with the second object area in the preset image object. Exemplarily, if the second object area is a user hand area, the third object area may be a user forearm area, and corresponding object key points may be a wrist key point and an elbow key point.

In practical applications, if there is no area key point in the second object area or the object specified display area cannot be determined based on the area key points in the second object area, the third object area in the preset image object that is adjacent to or is connected to the second object area may be determined, and at least two object key points corresponding to the third object area are determined. Further, a reference line is drawn from these object key points to the second object area, and then an area reference line that is located in the second object area and divides the second object area into two sub-areas is obtained. Then, any point may be selected from the area reference line, and in this case, the point may be used as the area central point of the corresponding object specified display area, thereby determining the object specified display area based on the area central point and the preset area shape.

The setting has the advantages: matching the arranged object specified display area with the second object area in spatial position, accurately displaying part or all information of the second object area, achieving an effect of only displaying the corresponding second object area in the object display area, then, solving the problem of displaying other effect areas in the effect area corresponding to the second object area when the effect area corresponding to the second object area overlaps with the other effect areas, and further improving the display effect of the effect image.

Further, a local area in the second area mask that is located in the object specified display area and corresponds to the second object area may be determined, and is used as the object display area.

S340: Adjust, in the case of existence of two or more effect areas, an area display position of at least one effect area based on a preset effect form, to obtain an effect object presenting the effect form.

S350: Determine a background image corresponding to the effect object, and display the effect object in the background image to obtain an effect image.

According to the technical solution in this embodiment of the present disclosure, an original image to be processed is acquired in response to an effect trigger operation. Then, in the case of a preset image object existing in the original image, a second object area in the preset image object is determined, and a second area mask corresponding to the second object area is determined. Then, an object display area corresponding to the second object area is determined based on the second area mask, and an effect area corresponding to the second object area is determined based on the object display area and the second object area. Further, in the case of existence of the two or more effect areas, an area display position of the at least one effect area is adjusted based on a preset effect form to obtain the effect object presenting the effect form, thereby allowing the effect object to change as the preset image object changes. Finally, a background image corresponding to the effect object is determined, and the effect object is displayed in the background image to obtain an effect image. The technical problem in the prior art that an added effect cannot be linked with a preset image object in an image has been solved, the effect of ensuring that no background image is included in the process of performing effect processing on the preset image object has been achieved, and meanwhile, by using area masking, steps of computation by the terminal device in the effect processing process can be reduced, improving the effect processing efficiency.

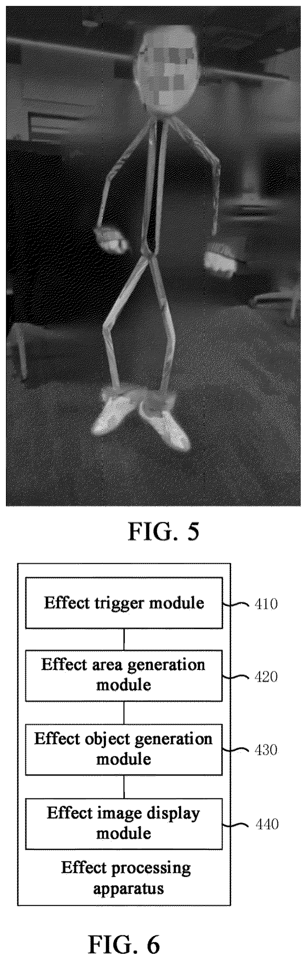

This embodiment is an optional embodiment of the above disclosed embodiments, an example in which the preset image object is a user, the first object area includes the limbs and the torso of the user, the effect area corresponding to the first object area is an area with the display size smaller than its display size in the original image. The second object area includes the head, the hands, and the feet of the user. The effect area corresponding to the second object area is an area with the display size being unchanged and displayed in the object display area and the effect object including two or more effect areas is used. Specifically, the method in this embodiment of the present disclosure includes the following steps:
1. Taking the right forearm as an example to describe a process of determining the effect area corresponding to the first object area: determining a corresponding right forearm area mask according to the original image and a right forearm area, and determining coordinates kp1 = vec2(x₀,y₀) and kp2 = vec2(x₁,y₁) of two area key points 1 and 2 corresponding to the right forearm area in the display interface.
2. Determine a straight line L1 passing through the points 1 and 2, and determine a slope k = (y₁ - y₀)/(x₁ - x₀) of L1, where a slope of a perpendicular line of L1 is kT = (x₀ - x₁)/(y₁ - y₀).
3. Arbitrarily select one of pixel points to be processed in the right forearm area mask, with coordinates being p = vec2(nₓ, n_{y}).
4. Draw a perpendicular line L2 passing through a point p towards L1, and determine coordinates J = vec2 (jₓ, j_{y}) of an intersection point of L1 and L2, where an x-coordinate of the intersection point J is jₓ = (k * x₁ - y₁ - nₓ * kT + n_{y})/k - kT, and a y-coordinate of the intersection point J is j_{y} = k * (jₓ - x₁) + y₁.
5. Construct a vector uvOffset = vec2(jₓ - nₓ, j_{y} - n_{y}) from the point p to the point J.
6. Use 5 times the length of uvOffset as a sampling distance, and acquire a target sampling point away from the point p by the sampling distance in a vector direction of uvOffset.
7. Update a pixel value of the target sampling point in the right forearm area mask to be a pixel value of the point p.
8. Determine four rectangle thresholds based on the points 1 and 2, construct an effect mask area based on the four rectangle thresholds, and determine an effect area corresponding to the first object area based on the original image and a pixel value of each pixel point to be processed in the effect mask area.
9. Implementations for the right upper arm, the left forearm, the left upper arm, the left upper leg, the left lower leg, the right upper leg, and the right lower leg are the same as the implementation for the right forearm. The implementation for the torso is the same as above. However, two area key points corresponding to the torso may be a neck key point and a central point of a connection line of two hip key points. An effect diagram of the effect area corresponding to the first object area is shown in FIG. 5. It can be seen from FIG. 5 that the display sizes of the right forearm, the right upper arm, the left forearm, the left upper arm, the left upper leg, the left lower leg, the right upper leg, the right lower leg, and the torso of the user are all reduced on the basis of the original display sizes.
10. Use an object area in the preset image object other than the first object area as a second object area and respectively determine a second area mask corresponding to the second object area.
11. Determine an object specified display area based on the area key points of the second object area.
   (1) The second object area is the head: drawing a circle with a nose key point as the circle center, with a radius being determined based on a product of a length from the nose key point to the neck key point and a preset coefficient (the coefficient is not fixed), and using a circle area as the object specified display area.
   (2) The second object area is the left hand: determining a circle center in a left hand area based on an extension line of a left wrist key point and a left elbow key point, drawing a circle with the circle center, with a radius being determined based on a product of a length from a central point of the connection line of the two hip key points to the neck key point and the preset coefficient (the coefficient is not fixed), and using a circle area as the object specified display area.
   (3) The second object area is the right hand: determining a circle center in a right hand area based on an extension line of a right wrist key point and a right elbow key point, drawing a circle with the circle center, with a radius being determined based on a product of a length from the central point of the connection line of the two hip key points to the neck key point and the preset coefficient (the coefficient is not fixed), and using a circle area as the object specified display area.
   (5) The second object area is the left foot: determining a circle center in a left foot area based on an extension line of a left ankle key point and a left knee key point, drawing a circle with the circle center, with a radius being determined based on a product of a length from the central point of the connection line of the two hip key points to the neck key point and the preset coefficient (the coefficient is not fixed), and using a circle area as the object specified display area.
   (6) The second object area is the right foot: determining a circle center in a right foot area based on an extension line of a right ankle key point and a right knee key point, drawing a circle with the circle center, with a radius being determined based on a product of a length from the central point of the connection line of the two hip key points to the neck key point and the preset coefficient (the coefficient is not fixed), and using a circle area as the object specified display area.
12. Use a local area in the second area mask that is located in the object specified display area and corresponds to the second object area as an object display area, and determine an effect area corresponding to the second object area based on the second object area and the object display area. For an effect diagram of the effect area corresponding to the second object area, continue to refer to FIG. 5. It can be seen from FIG. 5 that the head, the hands, and the feet of the user are all displayed in the corresponding object display area to generate the corresponding effect area.
13. Determine area display positions of the effect area corresponding to the first object area and the effect area corresponding to the second object area, and move the effect areas to the area display positions to obtain an effect object.
   (1) Construct a vector 1 from a left shoulder key point to the neck key point, and apply a displacement V1 to the left forearm, the left upper arm, and the left hand.
   (2) Construct a vector 2 from a right shoulder key point to the neck key point, and apply a displacement V2 to the right forearm, the right upper arm, and the right hand.
   (3) Calculate a central point of the two hip key points, construct a vector V3 from the left hip key point to the central point, and apply a displacement V3 to the left upper leg, the left lower leg, and the left foot.
   (4) Construct a vector V4 from the right hip key point to the central point, and apply a displacement V4 to the right upper leg, the right lower leg, and the right foot.

For a schematic diagram of the effect object, continue to refer to FIG. 5, respectively move the left forearm, the left upper arm, and the left hand to the neck position, the right forearm, the right upper arm, and the right hand to the neck, the left upper leg, the left lower leg, and left foot to the hip, and the right upper leg, the right lower leg, and the right foot to the hip.

According to the technical solution in this embodiment of the present disclosure, an original image to be processed is acquired in response to an effect trigger operation. Then, in the case of the preset image object existing in the original image, effect processing is performed on an area to be processed in the preset image object to obtain the effect area. Further, in the case of existence of the two or more effect areas, an area display position of the at least one effect area is adjusted based on a preset effect form to obtain the effect object presenting the effect form, and the effect object can change as the preset image object changes. Finally, a background image corresponding to the effect object is determined, and the effect object is displayed in the background image to obtain the effect image. The technical problem in the prior art that an added effect cannot be linked with a preset image object in an image has been solved, the effect of performing area effect processing on the preset image object in the image can be achieved, the effect image processing manner is more refined, meanwhile, the effect object presenting the effect form can be obtained by adjusting the area display positions of the effect areas, the richness and fun of the effect image are enhanced, and the usage experience of the user for the effect prop can be improved.

FIG. 6 is a schematic diagram of a structure of an effect processing apparatus according to an embodiment of the present disclosure. As shown in FIG. 6, the apparatus includes: an effect trigger module 410, an effect area generation module 420, an effect object generation module 430, and an effect image display module 440.

The effect trigger module 410 is configured to acquire an original image to be processed in response to an effect trigger operation;
the effect area generation module 420 is configured to perform, in the case of a preset image object existing in the original image, effect processing on an area to be processed in the preset image object to obtain an effect area;
the effect object generation module 430 is configured to adjust, in the case of existence of two or more effect areas, an area display position of at least one effect area based on a preset effect form, to obtain an effect object presenting the effect form; and
the effect image display module 440 is configured to determine a background image corresponding to the effect object, and display the effect object in the background image to obtain an effect image.

On the basis of the above technical solutions, the area to be processed includes a first object area. Accordingly, the effect area generation module 420 includes: a first object area determination submodule and a first effect area determination submodule.

The first object area determination submodule is configured to determine a first object area in the preset image object, and determine at least two area key points and a first area mask corresponding to the first object area; and
the first effect area determination submodule is configured to perform effect processing on the first object area based on the at least two area key points and the first area mask, to obtain an effect area corresponding to the first object area.

On the basis of the above technical solutions, the first effect area determination submodule includes: a target sampling point determination unit and a first effect area determination unit.

The target sampling point determination unit is configured to determine, for each pixel point to be processed in the first area mask, a target sampling point in the first area mask corresponding to the pixel point to be processed based on the at least two area key points; and
the first effect area determination unit is configured to determine an effect area corresponding to the first object area based on the pixel points to be processed, the target sampling points, the first area mask, and the original image.

On the basis of the above technical solutions, the target sampling point determination unit includes: a sampling reference point determination subunit and a target sampling point determination subunit.

The sampling reference point determination subunit is configured to determine, based on the at least two area key points, a sampling reference point in the first area mask corresponding to each pixel point to be processed; and
the target sampling point determination subunit is configured to determine, based on the pixel point to be processed and the sampling reference point, a target sampling point in the first area mask corresponding to the pixel point to be processed.

On the basis of the above technical solutions, the sampling reference point determination subunit is further configured to:
determine an area reference line corresponding to the first object area based on the at least two area key points; and
respectively determine sampling reference points corresponding to the pixel points to be processed based on the area reference line.

On the basis of the above technical solutions, the sampling reference point determination subunit is specifically configured to determine a point on the area reference line that is closest to the pixel point to be processed as a sampling reference point corresponding to the pixel point to be processed.

On the basis of the above technical solutions, the target sampling point determination subunit is further configured to:
construct a vector from the pixel point to be processed to the sampling reference point as a reference vector; and
determine, based on the reference vector, a target sampling point in the first area mask corresponding to the pixel point to be processed.

On the basis of the above technical solutions, the first effect area determination unit includes: a sampling pixel value update subunit, an effect mask area determination subunit, and a first effect area determination subunit.

The sampling pixel value update subunit is configured to update pixel values of the target sampling points corresponding to the pixel points to be processed in the first area mask to be sampling pixel values of the pixel points to be processed;
the effect mask area determination subunit is configured to determine an effect mask area corresponding to the first object area in the first area mask based on the at least two area key points; and
the first effect area determination subunit is configured to determine an effect area corresponding to the first object area based on the original image and the sampling pixel value of each pixel point to be processed in the effect mask area.

On the basis of the above technical solutions, the area to be processed further includes a second object area. Accordingly, the effect area generation module 420 further includes: a second object area determination submodule and a second effect area determination submodule.

The second object area determination submodule is configured to determine a second object area in the preset image object, and determine a second area mask corresponding to the second object area; and
the second effect area determination submodule is configured to determine an object display area corresponding to the second object area based on the second area mask, and determine an effect area corresponding to the second object area based on the object display area and the second object area.

On the basis of the above technical solutions, the effect area determination unit corresponding to the second object area includes: a first object display area determination subunit or a second object display area determination subunit.

The first object display area determination subunit is configured to determine a local area in the second area mask corresponding to the second object area as an object display area; alternatively,
the second object display area determination subunit is configured to determine an object specified display area based on the second object area, and determine a local area in the second area mask that is located in the object specified display area and corresponds to the second object area as an object display area.

On the basis of the above technical solutions, the second object display area determination subunit is further configured to:
determine an area central point of the object specified display area based on area key points of the second object area, or based on the second object area and an object key point in the preset image object that corresponds to the second object area; and
determine the object specified display area based on the area central point and a preset area shape.

On the basis of the above technical solutions, a display size of at least part of the object area in the effect object in at least one direction is smaller than its display size in the original image.

On the basis of the above technical solutions, the effect image display module includes: a background image determination unit.

The background image determination unit is configured to perform at least one of the following operations:
acquiring a default background image corresponding to the effect object;
receiving a background setting operation for a background image corresponding to the effect object;
using the original image as a background image corresponding to the effect object; and
acquiring background information other than the preset image object in the original image, and performing information completion processing on the background information to obtain a background image corresponding to the effect object.

According to the technical solution in this embodiment of the present disclosure, an original image to be processed is acquired in response to an effect trigger operation. Then, in the case of a preset image object existing in the original image, effect processing is performed on an area to be processed in the preset image object to obtain an effect area. Further, in the case of existence of the two or more effect areas, an area display position of the at least one effect area is adjusted based on a preset effect form to obtain the effect object presenting the effect form, and an effect object may change as the preset image object changes. Finally, a background image corresponding to the effect object is determined, and the effect object is displayed in the background image to obtain an effect image. The technical problem in the prior art that an added effect cannot be linked with a preset image object in an image can be solved, the effect of performing area effect processing on the preset image object in the image can be achieved, the effect image processing manner is more refined, the richness and fun of the effect image are enhanced, and the usage experience of the user for the effect prop is improved.

The effect processing apparatus according to this embodiment of the present disclosure may perform the effect processing method according to any embodiment of the present disclosure, and has the corresponding functional modules and beneficial effects for performing the method.

It should be noted that the various units and modules included in the above apparatus are only divided according to functional logics, but are not limited to the above division, as long as the corresponding functions can be achieved; and in addition, the specific names of the functional units are only for the convenience of distinguishing each other, and are not used to limit the scope of protection of the embodiments of the present disclosure.

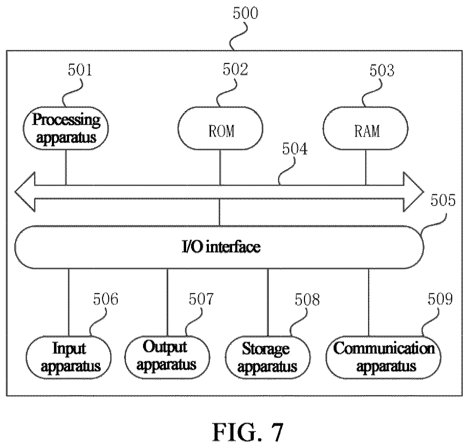

FIG. 7 is a schematic diagram of a structure of an electronic device according to an embodiment of the present disclosure. Referring to FIG. 7 as below, FIG. 7 illustrates a schematic diagram of a structure of an electronic device (e.g., a terminal device or a server in FIG. 7) 500 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle terminal (e.g., a vehicle navigation terminal), and fixed terminals such as a digital TV and a desktop computer. The electronic device shown in FIG. 7 is merely an example, and should not impose any limitation on the function and scope of use of the embodiments of the present disclosure.

As shown in FIG. 7, the electronic device 500 may include a processing apparatus (e.g., a central processing unit and a graphics processing unit) 501, which may perform various appropriate actions and processing according to a program stored on a read-only memory (ROM) 502 or a program loaded from a storage apparatus 508 into a random access memory (RAM) 503. The RAM 503 further stores various programs and data required for the operation of the electronic device 500. The processing apparatus 501, the ROM 502, and the RAM 503 are connected to one another through a bus 504. An input/output (I/O) interface 505 is also connected to the bus 504.

Typically, following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a magnetic tape and a hard drive; and a communication apparatus 509. The communication apparatus 509 may allow the electronic device 500 to be in wireless or wired communication with other devices for data exchange. Although FIG. 7 shows the electronic device 500 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, an embodiment of the present disclosure includes a computer program product, which includes a computer program carried on a non-transitory computer-readable medium, where the computer program includes program code for performing the method shown in the flowchart. In this embodiment, the computer program may be downloaded and installed from the network through the communication apparatus 509, or installed from the storage apparatus 508, or installed from the ROM 502. The computer program, when executed by the processing apparatus 501, performs the above functions limited in the method in this embodiment of the present disclosure.

The names of messages or information exchanged between a plurality of apparatuses in the implementations of the present disclosure are used for illustrative purposes only, and are not used to limit the scope of these messages or information.

The electronic device according to this embodiment of the present disclosure and the effect processing method according to the above embodiment belong to the same inventive concept, and for technical details not described in detail in this embodiment, reference may be made to the above embodiment. This embodiment and the above embodiment have the same beneficial effects.

An embodiment of the present disclosure provides a computer storage medium, having a computer program stored therein. The program, when executed by a processor, implements the effect processing method according to the above embodiment.

It should be noted that the above computer-readable medium described in the present disclosure may be a computer-readable signal medium, or a computer-readable storage medium, or any combination of the above. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network).Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to: acquire an original image to be processed in response to an effect trigger operation; perform, in the case of a preset image object existing in the original image, effect processing on an area to be processed in the preset image object to obtain an effect area; adjust, in the case of existence of two or more effect areas, an area display position of at least one effect area based on a preset effect form, to obtain an effect object presenting the effect form; and determine a background image corresponding to the effect object, and display the effect object in the background image to obtain an effect image.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit does not constitute a limitation on the unit itself in some cases. For example, a first acquiring unit may also be described as "a unit for acquiring at least two Internet protocol addresses."

Herein, the functions described above may be at least partially executed by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

According to one or more embodiments of the present disclosure, [Example 1] provides an effect processing method, including:
acquiring an original image to be processed in response to an effect trigger operation;
performing, in the case of a preset image object existing in the original image, effect processing on an area to be processed in the preset image object to obtain an effect area;
adjusting, in the case of existence of two or more effect areas, an area display position of at least one effect area based on a preset effect form, to obtain an effect object presenting the effect form; and
determining a background image corresponding to the effect object, and displaying the effect object in the background image to obtain an effect image.

According to one or more embodiments of the present disclosure, [Example 2] provides the method according to Example 1, where the area to be processed includes a first object area, and the method further includes:
optionally, determining a first object area in the preset image object, and determining at least two area key points and a first area mask corresponding to the first object area; and
performing effect processing on the first object area based on the at least two area key points and the first area mask, to obtain an effect area corresponding to the first object area.

According to one or more embodiments of the present disclosure, [Example 3] provides the method according to Example 2, further including:
optionally, determining, for each pixel point to be processed in the first area mask, a target sampling point in the first area mask corresponding to the pixel point to be processed based on the at least two area key points; and
determining an effect area corresponding to the first object area based on the pixel points to be processed, the target sampling points, the first area mask, and the original image.

According to one or more embodiments of the present disclosure, [Example 4] provides the method according to Example 3, further including:
optionally, determining, based on the at least two area key points, a sampling reference point in the first area mask corresponding to each pixel point to be processed; and
determining, based on the pixel point to be processed and the sampling reference point, a target sampling point in the first area mask corresponding to the pixel point to be processed.

According to one or more embodiments of the present disclosure, [Example 5] provides the method according to Example 4, further including:
optionally, determining an area reference line corresponding to the first object area based on the at least two area key points; and
respectively determining sampling reference points corresponding to the pixel points to be processed based on the area reference line.

According to one or more embodiments of the present disclosure, [Example 6] provides the method according to Example 5, further including:
optionally, determining a point on the area reference line that is closest to the pixel point to be processed as a sampling reference point corresponding to the pixel point to be processed.

According to one or more embodiments of the present disclosure, [Example 7] provides the method according to Example 4, further including:
optionally, constructing a vector from the pixel point to be processed to the sampling reference point as a reference vector; and
determining, based on the reference vector, a target sampling point in the first area mask corresponding to the pixel point to be processed.

According to one or more embodiments of the present disclosure, [Example 8] provides the method according to Example 3, further including:
optionally, updating pixel values of the target sampling points corresponding to the pixel points to be processed in the first area mask to sampling pixel values of the pixel points to be processed;
determining an effect mask area corresponding to the first object area in the first area mask based on the at least two area key points; and
determining an effect area corresponding to the first object area based on the original image and the sampling pixel value of each pixel point to be processed in the effect mask area.

According to one or more embodiments of the present disclosure, [Example 9] provides the method according to Example 1 or 2, where the area to be processed further includes a second object area, and the method further includes:
optionally, determining a second object area in the preset image object, and determining a second area mask corresponding to the second object area; and
determining an object display area corresponding to the second object area based on the second area mask, and determining an effect area corresponding to the second object area based on the object display area and the second object area.

According to one or more embodiments of the present disclosure, [Example 10] provides the method according to Example 9, further including:
optionally, using a local area in the second area mask corresponding to the second object area as an object display area; alternatively,
determining an object specified display area based on the second object area, and determining a local area in the second area mask that is located in the object specified display area and corresponds to the second object area as an object display area.

According to one or more embodiments of the present disclosure, [Example 11] provides the method according to Example 10, further including:
optionally, determining an area central point of the object specified display area based on area key points of the second object area, or based on the second object area and an object key point in the preset image object corresponding to the second object area; and
determining the object specified display area based on the area central point and a preset area shape.

According to one or more embodiments of the present disclosure, [Example 12] provides the method according to Example 1, where a display size of at least part of the object area in the effect object in at least one direction is smaller than its display size in the original image.

According to one or more embodiments of the present disclosure, [Example 13] provides the method according to Example 1, further including:
optionally, the determining a background image corresponding to the effect object including at least one of the following operations:
acquiring a default background image corresponding to the effect object;
receiving a background setting operation for a background image corresponding to the effect object;
determining the original image as a background image corresponding to the effect object; and
acquiring background information other than the preset image object in the original image, and performing information completion processing on the background information to obtain a background image corresponding to the effect object.

According to one or more embodiments of the present disclosure, [Example 14] provides an effect processing apparatus, including:
an effect trigger module, configured to acquire an original image to be processed in response to an effect trigger operation;
an effect area generation module, configured to perform, in the case of a preset image object existing in the original image, effect processing on an area to be processed in the preset image object to obtain an effect area;
an effect object generation module, configured to adjust, in the case of existence of two or more effect areas, an area display position of at least one effect area based on a preset effect form, to obtain an effect object presenting the effect form; and
an effect image display module, configured to determine a background image corresponding to the effect object, and display the effect object in the background image to obtain an effect image.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable subcombination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. An effect processing method, comprising:
acquiring an original image to be processed in response to an effect trigger operation;
performing, in the case of a preset image object existing in the original image, effect processing on an area to be processed in the preset image object to obtain an effect area;
adjusting, in the case of existence of two or more effect areas, an area display position of at least one effect area based on a preset effect form, to obtain an effect object presenting the effect form; and
determining a background image corresponding to the effect object, and displaying the effect object in the background image to obtain an effect image.

2. The effect processing method according to claim 1, wherein the area to be processed comprises a first object area, and performing the effect processing on the area to be processed in the preset image object to obtain the effect area comprises:
determining the first object area in the preset image object, and determining at least two area key points and a first area mask corresponding to the first object area; and
performing the effect processing on the first object area based on the at least two area key points and the first area mask, to obtain an effect area corresponding to the first object area.

3. The effect processing method according to claim 2, wherein performing the effect processing on the first object area based on the at least two area key points and the first area mask, to obtain the effect area corresponding to the first object area comprises:
determining, for each pixel point to be processed in the first area mask, a target sampling point in the first area mask corresponding to the pixel point to be processed based on the at least two area key points; and
determining the effect area corresponding to the first object area based on pixel points to be processed, target sampling points, the first area mask, and the original image.

4. The effect processing method according to claim 3, wherein determining the target sampling point in the first area mask corresponding to the pixel point to be processed based on the at least two area key points comprises:
determining, based on the at least two area key points, a sampling reference point in the first area mask corresponding to each pixel point to be processed; and
determining, based on the pixel point to be processed and the sampling reference point, the target sampling point in the first area mask corresponding to the pixel point to be processed.

5. The effect processing method according to claim 4, wherein determining, based on the at least two area key points, the sampling reference point in the first area mask corresponding to each pixel point to be processed comprises:
determining an area reference line corresponding to the first object area based on the at least two area key points; and
determining the sampling reference point corresponding to the pixel point to be processed based on the area reference line.

6. The effect processing method according to claim 5, wherein respectively determining sampling reference points corresponding to pixel points to be processed based on the area reference line comprises:
determining a point on the area reference line that is closest to a pixel point to be processed as a sampling reference point corresponding to the pixel point to be processed.

7. The effect processing method according to claim 4, wherein determining, based on the pixel point to be processed and the sampling reference point, the target sampling point in the first area mask corresponding to the pixel point to be processed comprises:
constructing a vector from the pixel point to be processed to the sampling reference point as a reference vector; and
determining, based on the reference vector, the target sampling point in the first area mask corresponding to the pixel point to be processed.

8. The effect processing method according to claim 3, wherein determining the effect area corresponding to the first object area based on the pixel points to be processed, the target sampling points, the first area mask, and the original image comprises:
updating pixel values of the target sampling points corresponding to the pixel points to be processed in the first area mask to be sampling pixel values of the pixel points to be processed;
determining an effect mask area corresponding to the first object area in the first area mask based on the at least two area key points; and
determining an effect area corresponding to the first object area based on the original image and a sampling pixel value of each pixel point to be processed in the effect mask area.

9. The effect processing method according to claim 1 or 2, wherein the area to be processed further comprises a second object area, and performing the effect processing on the area to be processed in the preset image object to obtain the effect area comprises:
determining the second object area in the preset image object, and determining a second area mask corresponding to the second object area; and
determining an object display area corresponding to the second object area based on the second area mask, and determining an effect area corresponding to the second object area based on the object display area and the second object area.

10. The effect processing method according to claim 9, wherein determining the object display area corresponding to the second object area based on the second area mask comprises:
determining a local area in the second area mask corresponding to the second object area as an object display area; or
determining an object specified display area based on the second object area, and determining a local area in the second area mask that is located in the object specified display area and corresponds to the second object area as the object display area.

11. The effect processing method according to claim 10, wherein determining the object specified display area based on the second object area comprises:
determining an area central point of the object specified display area based on an area key point of the second object area, or based on the second object area and an object key point in the preset image object corresponding to the second object area; and
determining the object specified display area based on the area central point and a preset area shape.

12. The effect processing method according to claim 1, wherein a display size of at least part of the object area in the effect object in at least one direction is smaller than its display size in the original image.

13. The effect processing method according to claim 1, wherein determining the background image corresponding to the effect object comprises at least one of the following operations:
acquiring a default background image corresponding to the effect object;
receiving a background setting operation for a background image corresponding to the effect object;
determining the original image as a background image corresponding to the effect object; or
acquiring background information other than the preset image object in the original image, and performing information completion processing on the background information to obtain a background image corresponding to the effect object.

14. An effect processing apparatus, comprising:
an effect trigger module, configured to acquire an original image to be processed in response to an effect trigger operation;
an effect area generation module, configured to perform, in the case of a preset image object existing in the original image, effect processing on an area to be processed in the preset image object to obtain an effect area;
an effect object generation module, configured to adjust, in the case of existence of two or more effect areas, an area display position of at least one effect area based on a preset effect form, to obtain an effect object presenting the effect form; and
an effect image display module, configured to determine a background image corresponding to the effect object, and display the effect object in the background image to obtain an effect image.

15. An electronic device, comprising:
one or more processors; and
a storage apparatus, configured to store one or more programs, wherein
the one or more programs, when executed by the one or more processors, cause the one or more processors to:
acquire an original image to be processed in response to an effect trigger operation;
perform, in the case of a preset image object existing in the original image, effect processing on an area to be processed in the preset image object to obtain an effect area;
adjust, in the case of existence of two or more effect areas, an area display position of at least one effect area based on a preset effect form, to obtain an effect object presenting the effect form; and
determine a background image corresponding to the effect object, and display the effect object in the background image to obtain an effect image.

16. The electronic device according to claim 15, wherein the area to be processed comprises a first object area, and performing the effect processing on the area to be processed in the preset image object to obtain the effect area comprises:
determining the first object area in the preset image object, and determining at least two area key points and a first area mask corresponding to the first object area; and
performing the effect processing on the first object area based on the at least two area key points and the first area mask, to obtain an effect area corresponding to the first object area.

17. The electronic device according to claim 16, wherein performing the effect processing on the first object area based on the at least two area key points and the first area mask, to obtain the effect area corresponding to the first object area comprises:
determining, for each pixel point to be processed in the first area mask, a target sampling point in the first area mask corresponding to the pixel point to be processed based on the at least two area key points; and
determining the effect area corresponding to the first object area based on pixel points to be processed, target sampling points, the first area mask, and the original image.

18. The electronic device according to claim 17, wherein determining the target sampling point in the first area mask corresponding to the pixel point to be processed based on the at least two area key points comprises:
determining, based on the at least two area key points, a sampling reference point in the first area mask corresponding to each pixel point to be processed; and
determining, based on the pixel point to be processed and the sampling reference point, the target sampling point in the first area mask corresponding to the pixel point to be processed.

19. The electronic device according to claim 18, wherein determining, based on the at least two area key points, the sampling reference point in the first area mask corresponding to each pixel point to be processed comprises:
determining an area reference line corresponding to the first object area based on the at least two area key points; and
determining the sampling reference point corresponding to the pixel point to be processed based on the area reference line.

20. The electronic device according to claim 19, wherein respectively determining sampling reference points corresponding to the pixel points to be processed based on the area reference line comprises:
determining a point on the area reference line that is closest to a pixel point to be processed as a sampling reference point corresponding to the pixel point to be processed.

21. The electronic device according to claim 18, wherein determining, based on the pixel point to be processed and the sampling reference point, the target sampling point in the first area mask corresponding to the pixel point to be processed comprises:
constructing a vector from the pixel point to be processed to the sampling reference point as a reference vector; and
determining, based on the reference vector, the target sampling point in the first area mask corresponding to the pixel point to be processed.

22. The electronic device according to claim 17, wherein determining the effect area corresponding to the first object area based on the pixel points to be processed, the target sampling points, the first area mask, and the original image comprises:
updating pixel values of the target sampling points corresponding to the pixel points to be processed in the first area mask to be sampling pixel values of the pixel points to be processed;
determining an effect mask area corresponding to the first object area in the first area mask based on the at least two area key points; and
determining an effect area corresponding to the first object area based on the original image and a sampling pixel value of each pixel point to be processed in the effect mask area.

23. The electronic device according to claim 15 or 16, wherein the area to be processed further comprises a second object area, and performing the effect processing on the area to be processed in the preset image object to obtain the effect area comprises:
determining the second object area in the preset image object, and determining a second area mask corresponding to the second object area; and
determining an object display area corresponding to the second object area based on the second area mask, and determining an effect area corresponding to the second object area based on the object display area and the second object area.

24. The electronic device according to claim 23, wherein determining the object display area corresponding to the second object area based on the second area mask comprises:
determining a local area in the second area mask corresponding to the second object area as an object display area; or
determining an object specified display area based on the second object area, and determining a local area in the second area mask that is located in the object specified display area and corresponds to the second object area as the object display area.

25. The electronic device according to claim 24, wherein determining the object specified display area based on the second object area comprises:
determining an area central point of the object specified display area based on an area key point of the second object area, or based on the second object area and an object key point in the preset image object corresponding to the second object area; and
determining the object specified display area based on the area central point and a preset area shape.

26. The electronic device according to claim 15, wherein a display size of at least part of the object area in the effect object in at least one direction is smaller than its display size in the original image.

27. The electronic device according to claim 15, wherein determining the background image corresponding to the effect object comprises at least one of the following operations:
acquiring a default background image corresponding to the effect object;
receiving a background setting operation for a background image corresponding to the effect object;
determining the original image as a background image corresponding to the effect object; or
acquiring background information other than the preset image object in the original image, and performing information completion processing on the background information to obtain a background image corresponding to the effect object.

28. A storage medium comprising computer-executable instructions, wherein the computer-executable instructions, when executed by a computer processor, perform the effect processing method according to any of claims 1 to 13.
